# EUROPEAN PATENT APPLICATION

(11) **EP 4 180 688 A1**
(43) Date of publication of application: **17.05.2023**
(21) Application number: 21208030.3
(22) Date of filing: 12.11.2021
(51) Int. Cl.: F16F 1/38, F16F 1/393, F16F 1/362

(54) **VIBRATION DAMPING DEVICE INTENDED TO DAMP THE VIBRATIONS BETWEEN TWO MECHANICAL PIECES**

(71) Applicant: Hutchinson Stop-Choc GmbH & Co.KG, 71272 Renningen (DE)
(72) Inventor: Wezel, Christoph, 71272 Renningen (DE)
(74) Representative: Ostertag & Partner Patentanwälte mbB

(57) **Abstract**

The vibration damping device (1) is intended to damp the vibrations between two mechanical pieces (P1, P2) and comprises an inner frame (6) intended to be fixed to one of the mechanical pieces (P1), and an outer frame (8) intended to be at least partly mounted into a bore (2) of the other mechanical piece (P2). The outer frame (8) is arranged around the inner frame (6). A damping structure (5) is arranged between the inner frame (6) and the outer frame (8) and comprises at least one wire mesh cushion (9A, 9B) having a conical shape so that the vibration damping device (1) damps vibrations in at least two perpendicular directions.

## Description

### TECHNICAL FIELD

The present invention relates to a vibration damping device intended to damp the vibrations between two mechanical pieces.

### BACKGROUND

Such a vibration damping device may be used in any field, notably but not exclusively railway, navy, aeronautics and automotive, requiring a control of the vibrations and/or a reduction of the noise for some equipments such as compressors, electronic control/auxiliary units for gasoline and electric engines, etc.

Although not exclusively, the present invention may be applied more particularly to the damping of vibrations at the fixing of a mechanical component of the equipment to another mechanical component supporting the equipment.

Usually, the vibration damping function is provided by an elastic mounting also named damping absorbers or damping devices. The elastic mounting is generally made of a rubber or silicon damping structure mounted between two metallic frames. The elastic properties of such a damping structure allow a reduction of the noise and the vibrations transmission between both mechanical components.

However, rubber or silicon elastic mountings are highly sensitive to temperature and/or load variations. The use of damper devices based on such elastic materials, under these extreme conditions, can contribute to accelerate their fatigue and stability.

Other damping devices can be used, for example mountings comprising wire mesh damping structures. Such damping structures do not deteriorate in the presence of oils, and their properties are stable against high amplitudes of load or temperature. They are made of knitted and rolled metallic wires, then pressed into a specific shape. However, the manufacturing or forming process can lead to different damping characteristics depending on the directions of vibration propagations.

Usually the mesh cushions are ring-shaped. Then the cushion height and the cushion seats have a significant influence on the ratio of axial to radial properties in view of statics, dynamics and endurance. One of the main reasons for this behavior is the shear stress in the wire mesh cushions perpendicular to the pressing direction of manufacture. Therefore, the pressing direction is also the preferred direction for many vibration technology applications.

These solutions are not fully satisfactory.

### SUMMARY

A purpose of the present invention is to propose a vibration damping device allowing to reduce the vibrations between two pieces along typical directions under extreme conditions.

For this purpose, the disclosure herein relates to a vibration damping device intended to damp the vibrations between a first mechanical piece and a second mechanical piece, the vibration damping device comprising:
- an inner frame intended to be fixed to said first mechanical piece,
- an outer frame intended to be at least partly mounted into a bore of said second mechanical piece, said outer frame being arranged around said inner frame, and
- a damping structure arranged between said inner frame and said outer frame.

According to the disclosure herein, the damping structure comprises at least one wire mesh cushion presenting a conical shape so that said vibration damping device is configured to damp vibrations in at least two perpendicular directions.

Thus, thanks to the conical wire mesh cushions in the damping structure, it is possible to damp the vibrations in equipments under demanding conditions such as high temperatures, high loads, etc. Moreover, the conical shape of the cushion allows to damp the vibrations in two perpendicular directions preferably axial and radial directions, without accelerating the wear of the vibration damping device in those directions.

During the manufacturing process, the knitted fabric is no longer just axially pressed and compressed, but rather displaced and compressed by the angle in both the axial and radial directions. Since the knitted wire mesh cushion was compressed axially and also radially by the resulting pressing force in a ratio corresponding to the angle, the finished damper has better radial properties during operation.

The contour of the cushion seats, which is matched to the shape of the cushion, has further advantages over ring-shaped dampers. In addition to the larger contact surface in the radial direction, the radial vibration is distributed to the cushion with radial and axial components instead of as shear stress in pressure.

Advantageously, said damping structure comprises a first wire mesh cushion and a second wire mesh cushion, said first wire mesh cushion and said second wire mesh cushion being arranged along said inner frame with mutually facing narrow extremities so as presenting an inverted double conical shape.

Moreover, a ratio between characteristics representative of vibrations in each of at least two perpendicular directions depends on a value of opening angles of said wire mesh cushions.

In a first embodiment, said outer frame is a one-block piece.

In another embodiment, said outer frame comprises a bushing mounted against the edge of said bore, a first washer and a second washer, said first washer being arranged between said first wire mesh cushion and said bushing, said second washer being arranged between said second wire mesh cushion and said bushing.

Moreover, said first washer is conformed to the shape of said first wire mesh cushion and said second washer is conformed to the shape of second wire mesh cushion.

Advantageously, in this embodiment, said bushing comprises a first ring facing said first washer and a second ring facing said second washer.

In addition, each of said first and second rings comprises an outer surface, a part of said outer surface of said first ring and a part said outer surface of said second ring forming a notch configured to receive the edge of said bore.

Advantageously, said vibration damping device, in which said inner frame comprises a tubular structure presenting an axis of symmetry, comprises two abutments, each abutment being arranged between said inner frame and a conical part of said wire mesh cushions so as to block any displacements of said vibration damping structure along the direction defined by the axis of symmetry.

In a particular embodiment, at least one of said two abutments is fixed to an extremity of said inner frame.

### BRIEF DESCRIPTION OF THE DRAWINGS

The appended example figures will elucidate how the present invention may be implemented. In these figures, identical references designate similar elements. More particularly:
- Figure 1 is a schematic sectional view, in perspective, of a first embodiment of a vibration damping device fixed on a mechanical piece,
- Figure 2 is a schematic cross sectional view of a wire mesh cushion of the vibration damping device shown in Figure 1,
- Figure 3 is an exploded view, in perspective, of the vibration damping device shown in Figures 1 and 2,
- Figure 4 is an exploded view, in perspective, of a second embodiment of the vibration damping device
- Figure 5 is an exploded view, in perspective, of third embodiment of the vibration damping device
- Figure 6 is an exploded view, in perspective, of a fourth embodiment of the vibration damping device and,
- Figure 7 is a schematic cross sectional view of a part of the device illustrated in Figure 6.

### DETAILED DESCRIPTION

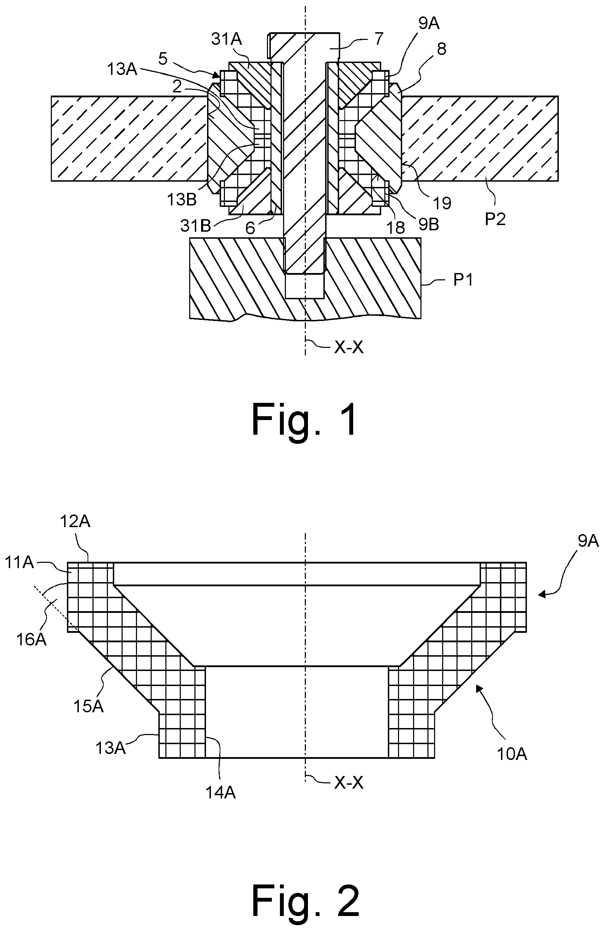

The vibration damping device 1 (hereinafter referred to as "damping device 1"), represented schematically in a first embodiment shown in Figures 1 to 3, is intended to damp the vibrations that can occur between a first mechanical piece P1 and a second mechanical piece P2. The mechanical piece P2 extends at least partly in a plane and comprises a bore 2. The mechanical piece P1 can also be provided with a bore. The damping device 1 can be fixed to mechanical pieces P1 and P2 so as to damp the vibrations between the mechanical pieces P1 and P2 in several directions. In particular, the damping device 1 is configured to damp vibrations in at least two perpendicular directions.

The damping device 1 comprises an inner frame formed by a tubular structure 6, an outer frame formed by a bushing 8 mounted around the inner frame, and a damping structure 5 arranged between the inner frame and the outer frame.

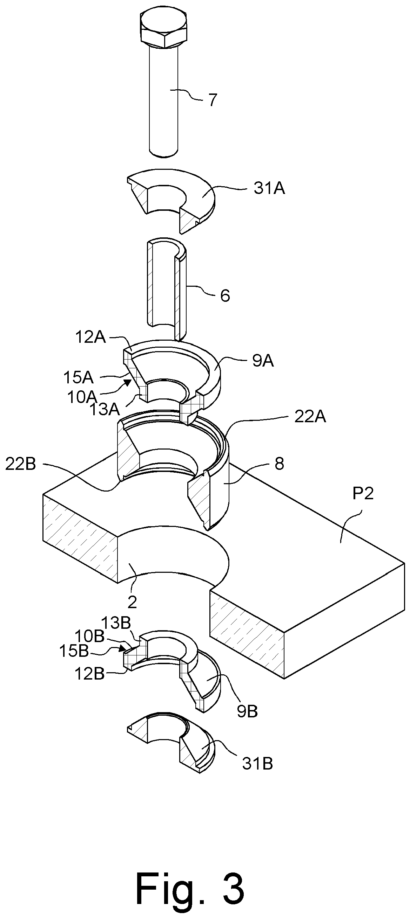

As represented in figure 3, the tubular structure 6 of the inner frame has a substantially longitudinal shape arranged along a longitudinal axis X-X when the damping device 1 is at rest. The tubular structure 6 is arranged through the bore 2 and can be used as a nut for a screw 7 so as to form together a bolt intended to fix the damping device 1 to the mechanical piece P2. For example, the tubular structure 6 of the inner frame can be made of a metallic material.

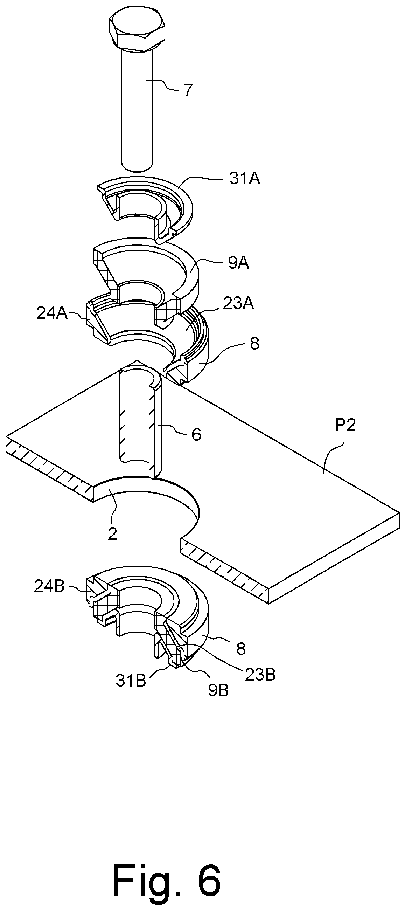

The outer frame is arranged in the plane of the mechanical piece P2. The bushing 8 forming the outer frame has a circular cross section and is arranged around the tubular structure 6 of the inner frame such that the inner frame and the outer frame are disposed coaxially when the damping device 1 is at rest. This is no longer the case when vibrations occur between the mechanical pieces P1 and P2. The bushing 8 forming the outer frame can be either mounted entirely, as represented in figures 3 to 5, or partly, as represented in figure 6, into the bore 2.

In the rest of the description, a coordinate system associated with the damping device 1 is used. This coordinate system is defined according to the longitudinal axis X-X which corresponds to the longitudinal arrangement direction of the tubular structure of the inner frame (for example, the axis of symmetry of the latter) and a transverse plane perpendicular to the longitudinal axis X-X and comprising a radial direction. The transverse plane corresponds to the plane in which the outer frame and the mechanical piece P2 are arranged. The adjectives « upper » and « lower » are defined, respectively, in the direction of the tubular structure 6 along the longitudinal axis X-X.

As for the radial direction, it is defined radially in a section transverse to the longitudinal axis X-X, from the center representing the position of the longitudinal axis X-X in the transverse plane. The adjectives « inner» and « outer » are defined with respect to the radial direction, respectively towards the longitudinal axis X-X (for "inner") and away from this longitudinal axis X-X (for "outer").

In a preferred embodiment, the damping device 1 can damp vibrations in axial direction along the longitudinal axis X-X and in radial directions in the transverse plane.

The damping structure 5 comprises two wire mesh cushions 9A, 9B each having a conical shape. By way of example, the wire mesh cushions 9A, 9B are made from a wire consisting of stainless steel, copper, aluminum or brass. The wire has a diameter between 0.02 millimeter and 1 millimeter. The wire is knitted into a sleeve that is rolled so as to form one of the wire mesh cushions 9A, 9B. The wire mesh cushions 9A, 9B can be pressed into a desired shape. Alternatively, a curly wire or spiral wire can be pressed into the desired shape without knitting. The wire mesh cushions 9A, 9B can be assembled to the tubular structure 6 of the inner frame and the bushing 8 of the outer frame by gluing, spot welding or any other technics known in the art. While in the embodiment shown the damping structure 5 comprises a first wire mesh cushion 9A and a second wire mesh cushion 9B, embodiments with a single mesh cushion are also contemplated.

The damping structure 5 which comprises a first and a second wire mesh cushion 9A and 9B has some advantages compared to a damping structure with cushions made of silicon or rubber. One advantages is that the operating temperature range of the damping structure 5 with wire mesh cushions 9A, 9B can be between - 40° C and 200° C. The use of rubber cushions, at such extreme operating temperatures, reduces the number of life cycles of the damping structures either because the rubber cushion becomes rigid at very low temperature, or because the rubber cushion has a reduced lifetime at temperatures above 100 degrees Celsius.

Moreover, the density of the wire mesh cushions 9A and 9B allows to support high static and dynamic loads. When the damping structure 5 is compressed, the mesh reduces until the wire mesh cushions 9A and 9B have a very high stiffness. This is not possible with damping structures including rubber cushions.

Figure 2 is an enlarged cross-section through the wire mesh cushion 9A. The latter has a conical shape and comprises a conical part 10A ending in a large extremity 11A. The large extremity 11A is provided with a rim 12A. On the opposite side of the large extremity 11A, along the longitudinal axis X-X, the conical part 10A ends with in a narrow extremity 13A. The narrow extremity 13A has a cylindrical shape and comprises an inner face 14A which is in contact with the tubular structure 6.

The conical part 10A of the wire mesh cushion 9A has an outer face 15A whose orientation regarding the longitudinal axis X-X defines an opening angle 16A, as shown in Figure 2.

In a preferred embodiment, the two mesh cushions 9A and 9B are identical. In other embodiments, the two mesh cushions 9A, 9B have different opening angles.

The conical shape of each wire mesh cushion 9A, 9B presents some advantages compared to cylindrical shaped cushions. One of the advantages concerns the damping of the axial and the radial vibrations generated by the mechanical pieces P2 and P1 during the operation of an equipment. Axial vibrations mean any change of the distance between the mechanical pieces P2 and P1 along the longitudinal axis X-X. Radial vibrations mean any displacement of one mechanical piece P2, P1 compared to the other mechanical piece P2 and P1, respectively, in their arrangement planes parallel to the transverse plane. The manufacturing or the forming of cylindrical shaped cushions can generate a preferential load and/or damping direction. This can lead to a premature wear of the damping structure in the non-preferential directions. The conical shaped wire mesh cushions 9A and 9B allow the damping device 1 through the damping structure 5 to damp both axial and radial vibrations without accelerating its wear in some directions.

In the first embodiment of Figures 1 to 3, the wire mesh cushion 9A and the wire mesh cushion 9B are mounted along the longitudinal axis X-X. As shown on figure 1, they are arranged with mutually facing narrow extremities 13A, 13B such that they form together a damping structure 5 with an inverted double conical shape along the longitudinal axis X-X. The narrow part of the double conical shape of the damping structure 5 is contained in the transverse plane such that the double conical shape is symmetrically arranged on either side of the mechanical piece P2. By doing so, the damping structure 5 can absorb in a substantially identical way the axial vibrations in both directions along the longitudinal axis X-X. The damping structure 5 can also damp in a substantially identical way the radial vibrations in any radial directions in the transverse plane.

Furthermore, the axial and radial vibrations can be represented by axial, respectively radial, characteristics. The axial and radial characteristics can comprise, among others, the frequency, the amplitude, the directions, etc.

In this embodiment, a ratio between radial characteristics and axial characteristics depends on the value of each of the opening angles 16A, 16B of the wire mesh cushions 9A and 9B. It is then possible to adjust the damping between axial and radial directions by forming wire mesh cushions 9A, 9B by specifying the opening angles 16A, 16B. By way of example, a value of opening angle 16A, 16B substantially equal to 45 degree can lead to a substantially identical damping of vibrations in both radial and axial directions.

In the embodiment shown, the ratio between radial and axial characteristics depends also on the shape of the outer frame formed by the bushing 8.

The bushing 8 is provided with an inner surface 18 and an outer surface 19. This inner surface 18 has a shape which is complementary to the shape of the wire mesh cushions 9A, 9B. This implies that the shape of the inner surface 18 corresponds to a double cone shape. The inner surface 18 comprises conical faces contacting the conical part 10A, 10B of each of the wire mesh cushions 9A, 9B, and a cylindrical face connecting both conical faces and in contact with the narrow extremities 13A, 13B along the longitudinal axis X-X. The outer surface 19 ends at an upper extremity 22A and a lower extremity 22B (see Figure 3). The lower extremity 22B is opposite to the upper extremity 22A along the longitudinal axis X-X.

The bushing 8 has a height that is substantially equal to the height of the two wire mesh cushions 9A and 9B forming the damping structure 5. The height of the bushing 8 as well as the height of the wire mesh cushions 9A, 9B are also parameters defining the preload and the elastic properties of the damping structure 5.

In the embodiment shown in Figures 1 to 3, the bushing 8 of the outer frame is a one-block piece. The one-block bushing 8 can be made of a metallic material which has been deep drawn. The outer surface 19 conforms to the edge of the bore 2 so that it is entirely in contact with the edge of the bore 2.

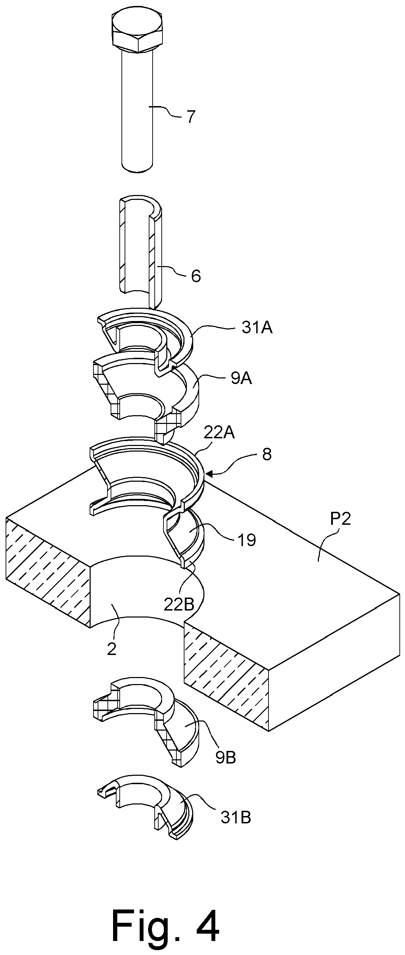

In a second embodiment shown in Figure 4, the outer surface 19 presents a double conical shape like the inner surface 18. The outer surface 19 is in contact with the edge of the bore 2 at the upper extremity 22A and the lower extremity 22B only.

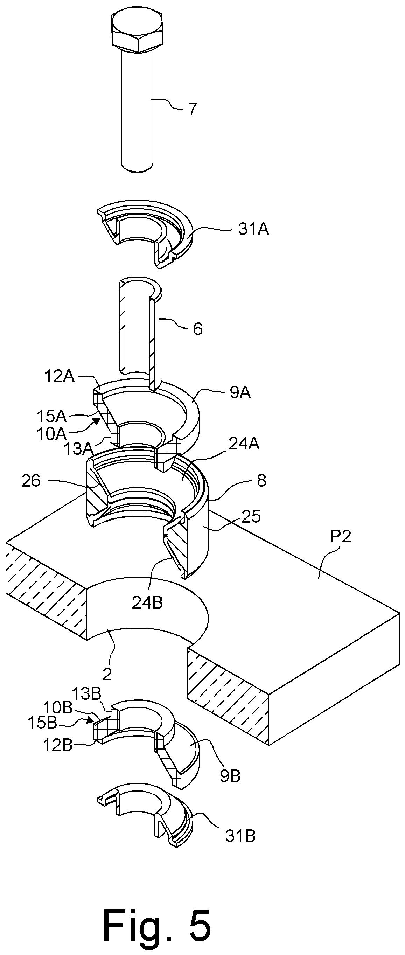

In a third embodiment shown in Figure 5, the outer frame comprises, in addition to the bushing 8, two washers 24A and 24B, each of them being arranged between a wire mesh cushion 9A, 9B and the bushing 8. Among the advantages of the bushing 8 is its role of reinforcement and support of the washers 24A, 24B. This strengthens the stability of the damping structure 5. The bushing 8 can also be used as an electric isolator. Moreover, the bushing 8 can contribute to the isolation against structure borne noise during operations.

Each of the two washers 24A, 24B can be a deep drawn metallic sheet moulded on the bushing 8 at high temperature. Moreover, each of the washers 24A, 24B is conformed to one of the wire mesh cushions 9A and 9B so as to be in contact with the rim 12A, 12B of the large extremity 11A, 11B, the outer face 15A, 15B of the conical part 10A, 10B and the narrow extremity 13A, 13B. By way of example, each washer 24A, 24B may have a funnel shape. The washers 24A, 24B are arranged with mutually facing extremities so as to present together an inverted double conical shape.

In the third embodiment shown in Figure 5, the bushing 8 is a one-block piece provided with a cylindrical outer face 25. This outer face 25 is preferably entirely in contact with the inner surface of the bore 2. The inner face 26 of the bushing 8 conforms to the inverted double conical shape of the washers 24A and 24B.

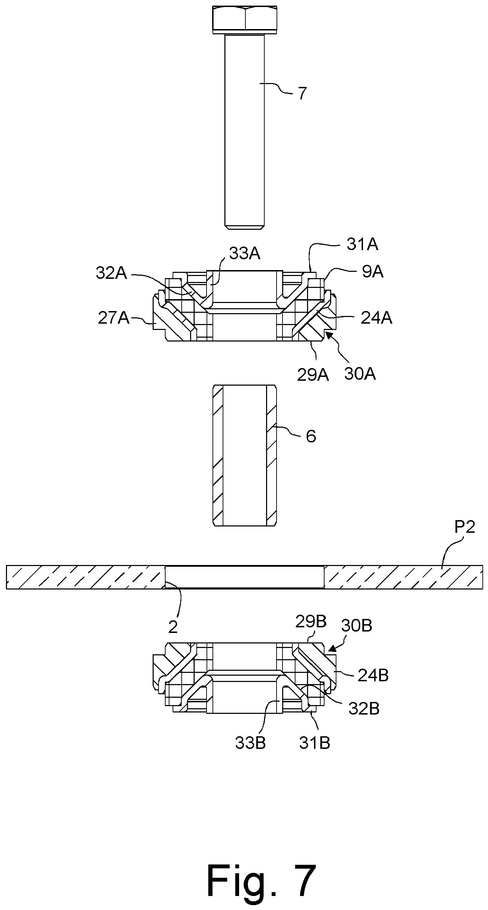

In the fourth embodiment shown in Figures 6 and 7, the bushing 8 consists of a first ring 27A facing the first washer 24A forming a first assembly and a second ring 27B facing the second washer 24B forming a second assembly such that the two assemblies form the outer frame. As shown in Figure 7, each ring 27A, 27B is provided with an outer face 29A, 29B, a part of which includes a recess 30A, 30B. Arranged together along the longitudinal axis X-X, the two recesses 30A and 30B form a circumferential notch that is configured to receive the edge of the bore 2. By doing so, the outer frame is partly in contact with the parallel surfaces of the mechanical piece P2.

Preferably the damping device 1 comprises two abutments 31A and 31B, as shown in Figures 3 to 7. The first abutment 31A is arranged on the upper part of the damping device 1 and the second abutment 31B is arranged on the lower part of the damping device 1 such that the two abutments 31A and 31B participate in blocking axial displacements of the damping structure 5 along the longitudinal axis X-X.

As shown in Figure 7, the abutments 31A and 31B are formed as flanges positioned at the conical parts 10A, 10B of the wire mesh cushions 9A and 9B. Each flange comprises an outer part 32A, 32B in contact with the conical part 10A, 10B of the wire mesh cushion 9A, 9B and an inner part 33A, 33B. The inner part 33A, 33B presents a cylindrical shape arranged along the longitudinal axis X-X and is in contact with the tubular structure 6 of the inner frame. The abutments 31A and 31B present an inner diameter conformed to the inner diameter of the tubular structure 6 such that the screw 7 can pass through the tubular structure 7 of the inner frame and the abutments 31A and 31B. For example, the abutments 31A and 31B are made in a metallic materials whose shape can be obtained after machining, casting, forging, or any other forming methods.

The abutment 31A may be integrated to the upper side of the inner frame, above the tubular structure 6 (not shown).

Since the knitted wire mesh cushions are mainly made from stainless steel wires, it makes sense to also manufacture cushion seats from the same or harder material in order to protect the vibrating components against abrasion. Since corrosion protection such as paint or metallic coating would also be rubbed off by the metal cushions in the event of vibrations, stainless steel should also be used for the cushion seats.

In case of vibrating structures e.g. made of aluminum, this can lead to contact corrosion, which must be avoided in many applications.

The variant shown in FIG. 7 enables to use a plastic component, namely the rings 27A, 27B, to separate the electro chemical series in addition to the stainless-steel cushion seats required against abrasion.

## Claims

1. Vibration damping device intended to damp the vibrations between a first mechanical piece (P1) and a second mechanical piece (P2), said vibration damping device (1) comprising:
- an inner frame (6) intended to be fixed to said first mechanical piece (P1),
- an outer frame (8) intended to be at least partly mounted into a bore (2) of said second mechanical piece (P2), said outer frame (8) being arranged around said inner frame (6), and
- a damping structure (5) arranged between said inner frame (6) and said outer frame (8),
**characterized in that**
said damping structure (5) comprises at least one wire mesh cushion (9A, 9B) having a conical shape so that said vibration damping device (1) damps vibrations in at least two perpendicular directions.

2. Vibration damping device according to any of claims 1 or 2,
**characterized in that** a ratio between characteristics representative of vibrations in each of at least two perpendicular directions depends on a value of opening angles (16A, 16B) of said at least one wire mesh cushion (9A, 9B).

3. Vibration damping device according to any of the preceding claims,
**characterized in that** said outer frame (8) is a one-block piece.

4. Vibration damping device according to any of the preceding claims,
**characterized in that** said damping structure (5) comprises a first wire mesh cushion (9A) and a second wire mesh cushion (9B), said first wire mesh cushion (9A) and said second wire mesh cushion (9B) being arranged along said inner frame (6) with mutually facing narrow extremities (13A, 13B) so as presenting an inverted double conical shape.

5. Vibration damping device according to claim 4,
**characterized in that** said outer frame (8) comprises a bushing (8) mounted against the edge of said bore (2), a first washer (24A) and a second washer (24B), said first washer (24A) being arranged between said first wire mesh cushion (9A) and said bushing (8), said second washer (24B) being arranged between said second wire mesh cushion (9B) and said bushing (8).

6. Vibration damping device according to claim 5,
**characterized in that** said first washer (24A) is conformed to the shape of said first wire mesh cushion (9A) and said second washer (24B) is conformed to the shape of second wire mesh cushion (9B).

7. Vibration damping device according to any of claims 5 and 6,
**characterized in that** said bushing (8) comprises a first ring (27A) facing said first washer (24A) and a second ring (27B) facing said second washer (24B).

8. Vibration damping device according to claim 7,
**characterized in that** each of said first and second rings (27A, 27B) comprises an outer face (29A, 29B), a part of said outer face (29A) of said first ring (27A) and a part of said outer face (29B) of said second ring (27B) forming a circumferential notch configured to receive the edge of said bore.

9. Vibration damping device according to any of the preceding claims,
in which said inner frame comprises a tubular structure (6) presenting an axis of symmetry (X-X), and
**characterized in that** said vibration damping device (1) comprises two abutments (31A, 31B), each abutment (31A, 31B) being arranged between said tubular structure (6) and a conical part (10A, 10B) of said wire mesh cushions (9A, 9B) so as to block any displacements of said vibration damping structure (1) along the direction defined by the axis of symmetry (X-X).

10. Vibration damping device according to claim 9,
**characterized in that** at least one of said two abutments (31A, 31B) is fixed to an extremity of said inner frame (6).
